# EUROPEAN PATENT SPECIFICATION

(11) **EP 4 127 460 B1**
(45) Date of publication and mention of the grant of the patent: **31.12.2025**
(21) Application number: 21729499.0
(22) Date of filing: 28.05.2021
(51) Int. Cl.: F03D 7/02

(54) **DEVICE AND METHOD OF CONTROLLING AN OPERATION OF A WIND TURBINE TO REDUCE LOAD AT YAW MISALIGNMENT**
VORRICHTUNG UND VERFAHREN ZUR STEUERUNG DES BETRIEBS EINER WINDTURBINE ZUR VERRINGERUNG DER LAST BEI GIERFEHLAUSRICHTUNG
DISPOSITIF ET PROCÉDÉ DE COMMANDE DU FONCTIONNEMENT D'UNE ÉOLIENNE POUR RÉDUIRE LA CHARGE AU DÉSALIGNEMENT DU LACET

(30) Priority: 05.06.2020 EP 20178413
(43) Date of publication of application: 08.02.2023
(73) Proprietor: Siemens Gamesa Renewable Energy A/S, 7330 Brande (DK)
(72) Inventor: ALBERTS, Johannes Gerhardes Wardjan, 2660 Brøndby Strand (DK); KALLESOEE, Bjarne Skovmose, 2880 Bagsværd (DK)
(74) Representative: SGRE-Association
(86) International application number: PCT/EP2021/064320
(87) International publication number: WO 2021/244962

(56) References cited:
- EP-A2- 2 762 721
- US-A1- 2012 112 458
- US-A1- 2012 134 807
- US-A1- 2015 377 215

## Description

### Field of invention

The present invention relates to a device and a method of controlling an operation of a wind turbine to reduce load at a yaw misalignment.

A conventional wind turbine comprises a nacelle and a tower, wherein the nacelle is rotatable mounted at the top of the tower. The axis of rotation of the nacelle with regard to the tower is referred to as a yaw axis. During situations, in which a high yaw misalignment occurs (i.e. a misalignment between the yaw position of the nacelle and a wind direction), cyclic loads can appear at multiple structural components. These loads are caused by the yaw misalignment between the yaw position of the nacelle and the wind direction, and the loads can be amplified by certain pitch angles, i.e. by a rotational angle of blade about a longitudinal axis of the blade. Therefore, a shutdown of the wind turbine or a curtailing operation would actually increase the loads under these circumstances, because during the shutdown or the curtailing operation, the pitch angle is usually increased.

It turned out that the conventional mitigation strategies (i.e. a shutdown of the wind turbine or a curtailing operation of the wind turbine) do not work properly, unless the wind turbine can be stopped in a very early stage, with a result of some false alarms and reduced availability.

The problem has been solved so far either by lowering the maximum wind speed of turbine operation or by increasing a capacity of the blades, the tower or other structural components to satisfy the load level. However, these prior art solutions are relative expensive and assume a stable load level to which the components can be designed. Moreover, the loads usually have large fluctuations so that it is difficult to handle them under all circumstances. Document US2012/134807 is a prior art example of reducing loads due to yaw misalignment on a wind turbine.

### Summary of the Invention

There may be a need for a device and a method of controlling an operation of a wind turbine to efficiently reduce a load at a yaw misalignment. This need may be met by the subject matters according to the independent claims. The present invention is further developed as set forth in the dependent claims.

According to a first aspect of the invention, a method of controlling an operation of a wind turbine is provided according to claim 1. The wind turbine comprises a rotor having a plurality of rotor blades, the rotor being mounted to a nacelle to rotate about a rotation axis and the nacelle being mounted to a tower to rotate about a yaw axis so that the rotation axis is also rotatable about the yaw axis. The method comprising the following steps: determining a wind direction, acquiring a yaw angle of the nacelle and the rotation axis, determining an angular misalignment between the wind direction and the yaw angle of the rotation axis, which angular misalignment is measured in a plane which is perpendicular to the yaw axis, and performing a stall operation in case the angular misalignment exceeds a predetermined threshold value.

Advantageously, the aerodynamic efficiency of the blade (that causes the high loads) is reduced by stalling the blade, when the predetermined threshold value is exceeded. As a result, the stall operation reduces the loads which are caused by the yaw misalignment.

In an embodiment, the method further comprises a step of determining a wind speed, wherein the predetermined threshold value is a function of the wind speed. Preferably, the greater the wind speed, the smaller the predetermined threshold value is. The threshold value can be stored in a lookup table.

In an embodiment, each blade is configured to be pitched by a pitch angle about a pitch axis of the blade, wherein the stall operation comprises setting the pitch angle beyond a predetermined stalling pitch angle.

In an embodiment, each blade comprises at least one trim stall member which is configured to change an aerodynamic property of the blade, wherein the stall operation comprises setting the trim stall member in a condition which deteriorates an aerodynamic efficiency of the blade.

According to a second aspect of the invention, a control device for controlling an operation of a wind turbine is provided according to claim 4. The wind turbine comprises a rotor having a plurality of rotor blades, the rotor being mounted to a nacelle to rotate about a rotation axis and the nacelle being mounted to a tower to rotate about a yaw axis so that the rotation axis is also rotatable about the yaw axis. The control device comprises a wind direction determining device configured to determine a wind direction, an acquiring device configured to acquire a yaw angle of the nacelle and the rotation axis, an angular misalignment determining device configured to determine an angular misalignment between the wind direction and the yaw angle of the rotation axis, which angular misalignment is measured in a plane perpendicular to the yaw axis, and a stall operation device configured to cause a stall operation in case the angular misalignment exceeds a predetermined threshold value.

In an embodiment, the control device further comprises a wind speed determining device configured to determine a wind speed, wherein the predetermined threshold value is a function of the wind speed. Preferably, the greater the wind speed, the smaller the predetermined threshold value is.

In an embodiment, each blade is configured to be pitched by a pitch angle about a pitch axis of the blade, wherein the stall operation device is configured to set the pitch angle beyond a predetermined stalling pitch angle. This embodiment can be realized without complex modifications of an existing wind turbine which is usually already equipped with a pitching system.

In an embodiment, each blade comprises at least one trim stall member which is configured to change an aerodynamic property of the blade, wherein the stall operation device is configured to set the trim stall member in a condition which deteriorates an aerodynamic efficiency of the blade. Advantageously, this measure can be implemented in an existing trim stall system without complex modifications. For example, existing trim stall flaps can be used, which deteriorate the aerodynamic efficiency so as to stall the blade. As a further advantage, the operation by a trim stall member is normally faster than the operation of the above-mentioned pitching system.

According to a third aspect of the invention, a wind turbine comprises the above-mentioned control device.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a wind turbine and the different elements thereof;
- Fig. 2: shows a block diagram explaining the method of controlling an operation of a wind turbine according to an embodiment; and
- Fig. 3: shows an example of a blade having a trim stall member.

### Detailed Description

The illustrations in the drawings are schematically. It is noted that in different figures, similar or identical elements are provided with the same reference signs.

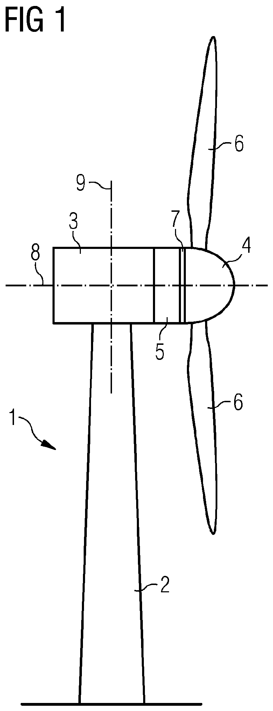

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing (not shown). The axis of rotation of the nacelle 3 with regard to the tower 2 is referred to as a yaw axis 9.

The wind turbine 1 also comprises a rotor 4 with three rotor blades 6 (of which two rotor blades 6 are depicted in Fig. 1). Each blade 6 is configured to be pitched by a pitch angle about a pitch axis of the blade 6. The pitch axis of the blade 6 is usually the longitudinal axis of the blade 6. The pitching is usually performed by a pitch actuator, for example a hydraulic pitch actuator. The rotor 4 is mounted rotatable with regard to the nacelle 3 by means of a main bearing 7. The rotor 4 is mounted rotatable about a rotation axis 8. The rotation axis 8 is usually orientated orthogonally (perpendicularly) to the yaw axis 9.

The wind turbine 1 furthermore comprises a generator 5. The generator 5 in turn comprises a rotor 10 connecting the generator 5 to the rotor 4. The rotor 4 is connected directly to the generator 5, thus the wind turbine 1 is referred to as a gearless, direct-driven wind turbine. Such a generator 5 is referred as direct drive generator 5. As an alternative, the rotor 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the rotor 4 into electrical energy in the shape of an AC power.

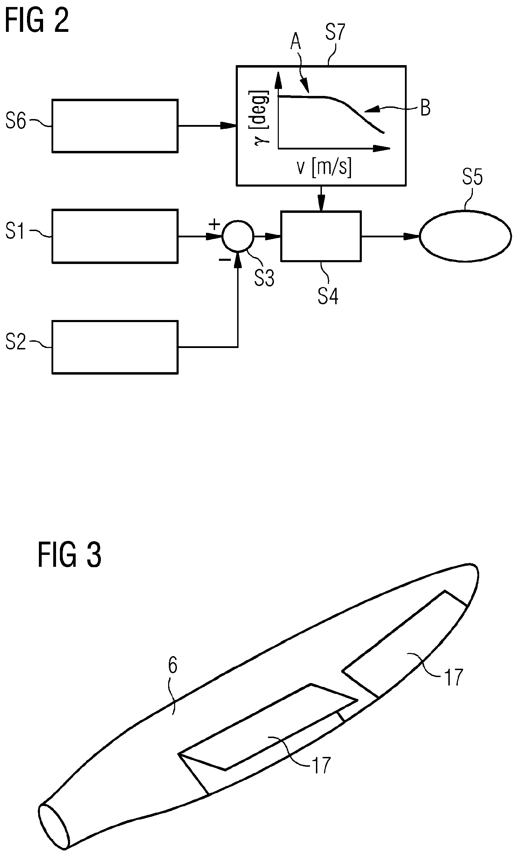

**Fig. 2** shows a block diagram explaining the method of controlling an operation of a wind turbine 1 according to an embodiment. The method comprises a step S1 of determining a wind direction, which can be done by a wind direction determining device. The wind direction determining device can be a wind direction detecting device. However, the wind direction can also indirectly be estimated based on other parameters than the wind direction. The wind speed and a wind direction can also be communicated from another wind turbine in the field, such as a wind park. The determined wind direction can refer to any predetermined reference direction where the wind direction is defined to be zero degree.

The method comprises a step S2 of acquiring a yaw angle of the nacelle 3 and the rotation axis 8. The yaw angle of the nacelle 3 and the rotation axis 8 can refer to any predetermined reference orientation where the yaw angle is defined to be zero degree. Preferably, the reference orientation where the yaw angle is zero degree coincides with the reference direction where the wind direction is also zero degree.

The method comprises a step S3 of determining an angular misalignment between the wind direction and the yaw angle of the rotation axis 8, which angular misalignment is measured in a plane which is perpendicular to the yaw axis 9. The method comprises a step S4 of checking whether the determined an angular misalignment exceeds a threshold value. The method comprises a step S5 of performing a stall operation in case the angular misalignment exceeds a predetermined threshold value.

In the embodiment of Fig. 2, the method further comprises a step S6 of determining a wind speed. The wind speed can be detected by a wind speed detecting device, or the wind speed can also indirectly be estimated based on other parameters than the wind speed. The wind speed and a wind direction can also be communicated from another wind turbine in the field, such as a wind park. The method comprises a step S7 where the predetermined threshold value γ [deg] is determined as a function of the wind speed v [m/s]. The threshold value γ and the wind speed v can be stored in a lookup table.

In the embodiment of Fig. 2, the threshold value γ as a function of the wind speed v is depicted in a graph which has a region A of lower wind speeds and a region B of higher wind speeds. The threshold value γ in the region A is greater than the threshold value γ in the region B. The graph reflects a rule, whereupon the greater the wind speed v, the smaller the predetermined threshold value γ is. In a preferred embodiment, the function, which is reflected by the graph, can be stored in a lookup table.

The stall operation can be realized by means of modifying the pitch angle of the blade 6. In particular, the step of performing the stall operation can comprise a step of setting the pitch angle of the blade 6 beyond a predetermined stalling pitch angle of the blade 6, where stalling at the blade 6 occurs. If an existing wind turbine is equipped with such a pitching system, no hardware modification is needed to implement the present invention. However, the stall operation can be realized by any other measure.

**Fig. 3** shows an example of a blade 6 having an active trim stall member 17, which is usually driven by a hydraulic trim stall actuator. The trim stall member 17 can also be driven by a pneumatic system. The trim stall member 17 is configured to change an aerodynamic property of the blade 6. The step of performing the stall operation can comprise a step of setting the trim stall member 17 in a condition which deteriorates an aerodynamic efficiency of the blade 6 so that stalling at the blade 6 occurs. For example, such condition can correspond to a maximum extended position of the trim stall member 17. In this embodiment, an existing trim stall system can be used, where an active trim stall member 17 or an active add-on member on the blade 6 will impair the aerodynamic efficiency of the blade 6 and thereby lower the loads caused by the yaw misalignment. If an existing wind turbine is equipped with such trim stall members 17, no hardware modification is needed to implement the present invention.

The method above can be implemented in a control device (not shown) which is configured to control an operation of a wind turbine 1. The control device comprises a wind direction determining device configured to determine a wind direction, an acquiring device configured to acquire a yaw angle of the nacelle 3 and the rotation axis 8, an angular misalignment determining device configured to determine an angular misalignment between the wind direction and the yaw angle of the rotation axis 8, which angular misalignment is measured in a plane which is perpendicular to the yaw axis 9, and a stall operation device configured to cause a stall operation in case the angular misalignment exceeds a predetermined threshold value.

The control device can further comprise a wind speed determining device configured to determine a wind speed, wherein the predetermined threshold value is a function of the wind speed. Preferably, the greater the wind speed, the smaller the predetermined threshold value is.

In a simple implementation, each blade 6 can configured to be pitched by a pitch angle about a pitch axis of the blade 6, wherein the stall operation device is configured to set the pitch angle beyond a predetermined stalling pitch angle.

In the embodiment of Fig. 3, each blade 6 comprises at least one trim stall member 17 which is configured to change an aerodynamic property of the blade 6, wherein the stall operation device is configured to set the trim stall member 17 in a condition which deteriorates an aerodynamic efficiency of the blade 6.

In a modified embodiment, any other device or measure can be used in order to perform the stall operation.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. A method of controlling an operation of a wind turbine (1), the wind turbine (1) comprising a rotor (4) having a plurality of rotor blades (6), wherein each blade (6) is configured to be pitched by a pitch angle about a pitch axis of the blade (6), wherein beyond a predetermined stalling pitch angle of the blade (6), stalling at the blade (6) occurs, the rotor (4) being mounted to a nacelle (3) to rotate about a rotation axis (8) and the nacelle (3) being mounted to a tower (2) to rotate about a yaw axis (9) so that the rotation axis (8) is also rotatable about the yaw axis (9), the method comprises the following steps:
determining a wind direction ;
acquiring a yaw angle of the nacelle (3) and the rotation axis (8); and
determining an angular misalignment between the wind direction and the yaw angle of the rotation axis (8), which angular misalignment is measured in a plane which is perpendicular to the yaw axis (9),
**characterized by**
performing a stall operation in case the angular misalignment exceeds a predetermined threshold value by at least one of the following:
a) setting the pitch angle beyond the predetermined stalling pitch angle; or
b) each blade (6) is provided by at least one trim stall member (17) which is configured to change an aerodynamic property of the blade (6), wherein the stall operation comprises setting the trim stall member (17) in a condition which deteriorates an aerodynamic efficiency of the blade (6).

2. The method according to the preceding claim, further comprising:
determining a wind speed, wherein the predetermined threshold value is a function of the wind speed.

3. The method according to the preceding claim, wherein
the greater the wind speed, the smaller the predetermined threshold value is.

4. A control device for controlling an operation of a wind turbine (1), the wind turbine (1) comprising a rotor (4) having a plurality of rotor blades (6), each blade (6) is configured to be pitched by a pitch angle about a pitch axis of the blade (6), wherein beyond a predetermined stalling pitch angle of the blade (6), stalling at the blade (6) occurs, the rotor (4) being mounted to a nacelle (3) to rotate about a rotation axis (8) and the nacelle (3) being mounted to a tower (2) to rotate about a yaw axis (9) so that the rotation axis (8) is also rotatable about the yaw axis (9), the control device comprises:
a wind direction determining device configured to determine a wind direction ;
an acquiring device configured to acquire a yaw angle of the nacelle (3) and the rotation axis (8);
and
an angular misalignment determining device configured to determine an angular misalignment between the wind direction and the yaw angle of the rotation axis (8), which angular misalignment is measured in a plane which is perpendicular to the yaw axis (9),
**characterized by**
a stall operation device configured to cause a stall operation in case the angular misalignment exceeds a predetermined threshold value by at least one of the following:
a) the stall operation device is configured to set the pitch angle beyond the predetermined stalling pitch angle;
b) each blade (6) comprises at least one trim stall member (17) which is configured to change an aerodynamic property of the blade (6), wherein the stall operation device is configured to set the trim stall member (17) in a condition which deteriorates an aerodynamic efficiency of the blade (6).

5. The control device according to the preceding claim, further comprising:
a wind speed determining device configured to determine a wind speed, wherein the predetermined threshold value is a function of the wind speed.

6. The control device according to the preceding claim, wherein
the greater the wind speed, the smaller the predetermined threshold value is.

7. A wind turbine (1) comprising the control device according to any one of claims 4 to 6.

## Patentansprüche

1. Verfahren zum Steuern eines Betriebs einer Windenergieanlage (1), wobei die Windenergieanlage (1) einen Rotor (4) mit einer Vielzahl von Rotorblättern (6) umfasst, wobei jedes Blatt (6) dazu ausgelegt ist, um einen Einstellwinkel um eine Einstellachse des Blatts (6) verstellt zu werden, wobei jenseits eines vorbestimmten Strömungsabrisseinstellwinkels des Blatts (6) ein Strömungsabriss an dem Blatt (6) auftritt, wobei der Rotor (4) an einer Gondel (3) montiert ist, um sich um eine Rotationsachse (8) zu drehen, und die Gondel (3) an einem Turm (3) montiert ist, um sich um eine Gierachse (9) zu drehen, sodass die Rotationsachse (8) auch um die Gierachse (9) drehbar ist, wobei das Verfahren die folgenden Schritte umfasst:
Bestimmen einer Windrichtung;
Erfassen eines Gierwinkels der Gondel (3) und der Rotationsachse (8); und
Bestimmen einer Winkelfehlausrichtung zwischen der Windrichtung und dem Gierwinkel der Rotationsachse (8), wobei die Winkelfehlausrichtung in einer Ebene gemessen wird, die rechtwinklig zur Gierachse (9) ist,
**gekennzeichnet durch**
Durchführen eines Strömungsabrissbetriebs, falls die Winkelfehlausrichtung einen vorbestimmten Schwellenwert überschreitet, durch mindestens eines des Folgenden:
a) Einstellen des Einstellwinkels jenseits des vorbestimmten Strömungsabrisseinstellwinkels; oder
b) jedes Blatt (6) ist mit mindestens einem Trim-Strömungsabrisselement (17) versehen, das dazu ausgelegt ist, eine aerodynamische Eigenschaft des Blatts (6) zu ändern, wobei der Strömungsabrissbetrieb das Einstellen des Trim-Strömungsabrisselements (17) in einen Zustand umfasst, der einen aerodynamischen Wirkungsgrad des Blatts (6) verschlechtert.

2. Verfahren nach dem vorhergehenden Anspruch, ferner umfassend:
Bestimmen einer Windgeschwindigkeit, wobei der vorbestimmte Schwellenwert eine Funktion der Windgeschwindigkeit ist.

3. Verfahren nach dem vorhergehenden Anspruch, wobei, je größer die Windgeschwindigkeit ist, desto kleiner der vorbestimmte Schwellenwert ist.

4. Steuervorrichtung zum Steuern eines Betriebs einer Windenergieanlage (1), wobei die Windenergieanlage (1) einen Rotor (4) mit einer Vielzahl von Rotorblättern (6) umfasst, wobei jedes Blatt (6) dazu ausgelegt ist, um einen Einstellwinkel um eine Einstellachse des Blatts (6) verstellt zu werden, wobei jenseits eines vorbestimmten Strömungsabrisseinstellwinkels des Blatts (6) ein Strömungsabriss an dem Blatt (6) auftritt, wobei der Rotor (4) an einer Gondel (3) montiert ist, um sich um eine Rotationsachse (8) zu drehen, und die Gondel (3) an einem Turm (3) montiert ist, um sich um eine Gierachse (9) zu drehen, sodass die Rotationsachse (8) auch um die Gierachse (9) drehbar ist, wobei die Steuervorrichtung umfasst:
eine Windrichtungsbestimmungsvorrichtung, die dazu ausgelegt ist, eine Windrichtung zu bestimmen;
eine Erfassungsvorrichtung, die dazu ausgelegt ist, einen Gierwinkel der Gondel (3) und der Rotationsachse (8) zu erfassen; und
eine Winkelfehlausrichtungsbestimmungsvorrichtung, die dazu ausgelegt ist, eine Winkelfehlausrichtung zwischen der Windrichtung und dem Gierwinkel der Rotationsachse (8) zu bestimmen, wobei die Winkelfehlausrichtung in einer Ebene gemessen wird, die rechtwinklig zur Gierachse (9) ist,
**gekennzeichnet durch**
eine Strömungsabrissbetriebsvorrichtung, die dazu ausgelegt ist,
einen Strömungsabrissbetrieb zu verursachen, falls die Winkelfehlausrichtung einen vorbestimmten Schwellenwert überschreitet, durch mindestens eines des Folgenden:
a) die Strömungsabrissbetriebsvorrichtung ist dazu ausgelegt, den Einstellwinkel jenseits des vorbestimmten Strömungsabrisseinstellwinkels einzustellen;
b) jedes Blatt (6) umfasst mindestens ein Trim-Strömungsabrisselement (17), das dazu ausgelegt ist, eine aerodynamische Eigenschaft des Blatts (6) zu ändern, wobei die Strömungsabrissbetriebsvorrichtung dazu ausgelegt ist, das Trim-Strömungsabrisselement (17) in einen Zustand einzustellen, der einen aerodynamischen Wirkungsgrad des Blatts (6) verschlechtert.

5. Steuervorrichtung nach dem vorhergehenden Anspruch, ferner umfassend:
eine Windgeschwindigkeitsbestimmungsvorrichtung, die dazu ausgelegt ist, eine Windgeschwindigkeit zu bestimmen, wobei der vorbestimmte Schwellenwert eine Funktion der Windgeschwindigkeit ist.

6. Steuervorrichtung nach dem vorhergehenden Anspruch, wobei, je größer die Windgeschwindigkeit ist, desto kleiner der vorbestimmte Schwellenwert ist.

7. Windenergieanlage (1), umfassend die Steuervorrichtung nach einem der Ansprüche 4 bis 6.

## Revendications

1. Procédé de commande d'un fonctionnement d'une éolienne (1), l'éolienne (1) comprenant un rotor (4) ayant une pluralité de pales de rotor (6), dans lequel chaque pale (6) est configurée pour être inclinée selon un angle de pas autour d'un axe de pas de la pale (6), dans lequel au-delà d'un angle de pas de calage prédéterminé de la pale (6), le calage se fait au niveau de la pale (6), le rotor (4) étant monté sur une nacelle (3) pour tourner autour d'un axe de rotation (8) et la nacelle (3) étant montée sur une tour (2) pour tourner autour d'un axe de lacet (9) de sorte que l'axe de rotation (8) peut aussi tourner autour de l'axe de lacet (9), le procédé comprend les étapes suivantes :
détermination d'un sens du vent par rapport à l'axe de rotation (8) ; et
détermination d'un désalignement angulaire entre le sens du vent et l'axe de rotation (8), lequel désalignement angulaire est mesuré dans un plan qui est perpendiculaire à l'axe de lacet (9),
**caractérisé par**
la réalisation d'une opération de calage dans le cas où le désalignement angulaire dépasse une valeur seuil prédéterminée d'au moins l'un des éléments suivants :
a) établissement de l'angle de pas au-delà de l'angle de pas de calage prédéterminé ; ou
b) chaque pale (6) est dotée d'au moins un élément (17) de calage de l'habillage qui est configuré pour modifier une propriété aérodynamique de la pale (6), dans lequel l'opération de calage comprend l'établissement de l'élément (17) de calage de l'habillage dans une condition qui dégrade une efficacité aérodynamique de la pale (6).

2. Procédé selon la revendication précédente, comprenant, en outre :
la détermination d'une vitesse du vent, la valeur seuil prédéterminée étant fonction de la vitesse du vent.

3. Procédé selon la revendication précédente, dans lequel
plus la vitesse du vent est grande, plus la valeur seuil prédéterminée est petite.

4. Dispositif de commande pour commander un fonctionnement d'une éolienne (1), l'éolienne (1) comprenant un rotor (4) ayant une pluralité de pales de rotor (6), chaque pale (6) est configurée pour être inclinée selon un angle de pas autour d'un axe de pas de la pale (6), dans lequel au-delà d'un angle de pas de calage prédéterminé de la pale (6), le calage se fait au niveau de la pale (6), le rotor (4) étant monté sur une nacelle (3) pour tourner autour d'un axe de rotation (8) et la nacelle (3) étant montée sur une tour (2) pour tourner autour d'un axe de lacet (9) de sorte que l'axe de rotation (8) peut aussi tourner autour de l'axe de lacet (9), le dispositif de commande comprend :
un dispositif déterminant le sens du vent configuré pour déterminer un sens du vent par rapport à l'axe de rotation (8) ;
et
un dispositif de détermination du désalignement angulaire configuré pour déterminer un désalignement angulaire entre le sens du vent et l'axe de rotation (8), lequel désalignement angulaire est mesuré dans un plan qui est perpendiculaire à l'axe de lacet (9),
**caractérisé par**
un dispositif d'opération de calage configuré pour entraîner une opération de calage dans le cas où le désalignement angulaire dépasse une valeur seuil prédéterminée par au moins l'un des éléments suivants :
a) le dispositif d'opération de calage est configuré pour établir l'angle de pas au-delà de l'angle de pas de calage prédéterminé ;
b) chaque pale (6) comprend au moins un élément (17) de calage de l'habillage qui est configuré pour modifier une propriété aérodynamique de la pale (6), dans lequel le dispositif de l'opération de calage est configuré pour établir l'élément (17) de calage de l'habillage dans une condition qui dégrade une efficacité aérodynamique de la pale (6).

5. Dispositif de commande selon la revendication précédente, comprenant, en outre :
un dispositif de détermination de la vitesse du vent configuré pour déterminer une vitesse du vent, dans lequel la valeur seuil prédéterminée est une fonction de la vitesse du vent.

6. Dispositif de commande selon la revendication précédente, dans lequel
plus la vitesse du vent est grande, plus la valeur seuil prédéterminée est petite.

7. Éolienne (1) comprenant le dispositif de commande selon l'une quelconque des revendications 4 à 6.
